# FASCICULE DE BREVET EUROPEEN

(11) **EP 1 882 578 B1**
(45) Date de publication et mention de la délivrance du brevet: **09.09.2009**
(21) Numéro de dépôt: 07110939.1
(22) Date de dépôt: 25.06.2007
(51) Int. Cl.: B29C 47/22, B29D 30/38, B29C 47/28

(54) **Dispositif et procédé de gainage de câblé et le câble manufacturé**
Vorrichtung und Verfahren zur Ummantelung von Kabeln und das damit hergestellte Kabel
Apparatus and method for sheathing of cables and the manufactured cable

(30) Priorité: 27.07.2006 FR 0606977
(43) Date de publication de la demande: 30.01.2008
(73) Titulaire: Société de Technologie Michelin, 63000 Clermont-Ferrand (FR); Michelin Recherche et Technique S.A., 1763 Granges-Paccot (CH)
(72) Inventeur: Druet, Michel, 63122 Ceyrat (FR); Jaunet, Nicolas, 63830 Durtol (FR)
(74) Mandataire: Lasson, Cédric Y. M.

(56) Documents cités:
- WO-A-02/20898
- DE-A1- 2 457 249
- FR-A- 2 879 500
- JP-A- 60 110 422
- JP-A- 62 222 824

## Description

L'invention concerne le domaine du recouvrement d'un élément filiforme par un matériau plastique ou thermoplastique, et en particulier le gainage d'un fil par un mélange de caoutchouc ou de matière thermoplastique.

On entend par fil, un élément filiforme composé d'un seul ou de plusieurs brins, textile ou métallique, arrangés entre eux pour former un seul fil unitaire. Le fil peut également être décrit sous l'appellation de câblé textile ou métallique.

Les dispositifs de gainage des câbles comprennent en règle générale un moyen de guidage du fil en entrée du dispositif, une chambre centrale reliée par un conduit orienté perpendiculairement à la direction de progression du fil à un moyen d'extrusion apte à délivrer sous pression un matériau plastique ou thermoplastique se présentant à l'état visqueux et dans laquelle le mélange sous pression vient enrober ledit fil, et une filière d'extrusion d'une section de calibrage donnée.

Le matériau se dépose à la surface du fil au niveau de la chambre centrale. Par son mouvement le fil entraîne le matériau de gainage vers la filière de sortie dont la section de calibrage confère au fil la forme de sa section finale.

Un dispositif de ce type est décrit, à tire d'exemple, dans la publication WO/93/15896 pour la fabrication d'un fil unitaire enrobé. Des dispositifs analogues sont également connus pour enduire d'une matière visqueuse des nappes de fils disposés côte à côte parallèlement les uns aux autres dans un même plan de manière à obtenir une bandelette de fils enrobés.

Un problème connu, lié à la nature de ce type de dispositif, concerne le contrôle de la section de sortie. On observe en effet que la quantité de gomme déposée, et par voie de conséquence le diamètre du fil gainé, diminue avec l'augmentation de la vitesse lorsque l'on maintien à un niveau constant la pression dans la chambre centrale. Cet effet vitesse, est lié à l'entraînement du matériau par le fil.

La section de la gaine est donc très légèrement inférieure à la section S de la filière de calibrage. Il est donc nécessaire d'augmenter la pression dans la chambre centrale pour maintenir constante la section de la gaine lorsque l'on augmente la vitesse de progression du fil.

Cette problématique est décrite, à titre illustratif, dans la publication US 5 169 548, qui divulgue un dispositif de régulation du diamètre agissant sur la vitesse de rotation de la vis d'extrusion ou sur la vitesse de défilement du fil. La publication DE 24 57 249 divulgue un dispositif comprenant deux filières coaxiales de manière à déposer alternativement une ou deux couches de matériau sur un fil. La publication JP 60 110 422 divulgue un dispositif permettant d'ajuster la pression dans la chambre centrale en modifiant la position axiale du guide fil.

Toutefois, ces moyens de régulation sont limités lorsque l'on cherche à obtenir un gainage de faible épaisseur et aucun de ces documents, ne traite du problème de l'augmentation de la vitesse de gainage.

En effet la perte de charge liée à la faible section de calibrage de la filière de sortie conduit à élever la pression dans la chambre centrale à des niveaux très élevés pour réduire les effets liés à la vitesse évoqués ci-dessus.

Il est alors nécessaire de prévoir des dispositifs aptes à réguler la pression sur des plages de fonctionnement importantes, ce qui accroît la complexité et le coût, lorsque l'on désire augmenter l'amplitude des variations de vitesse de progression du fil dans le dispositif de gainage.

L'invention a pour objet d'apporter une solution originale à cette problématique.

Selon l'invention le dispositif de gainage d'un ou plusieurs fils par un matériau plastique ou thermoplastique comprend un moyen de guidage du ou des fils disposé en entrée du dispositif, et qui débouche dans une chambre centrale reliée par un conduit à un moyen d'extrusion apte à délivrer sous pression ledit matériau se présentant à l'état visqueux, et une filière de sortie du ou des fils gainés d'une section de calibrage donnée S₁.

Ce dispositif comprend en outre au moins une filière mobile de section de calibrage S₂ inférieure à la section de calibrage S₁. Cette filière est entraînée dans la direction du sens de progression du ou des fils par un actionneur traversant la chambre centrale et comportant un passage permettant de mettre en communication la chambre centrale avec l'espace intérieur de la filière mobile. Ainsi, lorsque le dispositif est en fonctionnement, l'actionneur déplace axialement ladite filière mobile entre une position dans laquelle ladite filière mobile s'interpose, en aval de la chambre centrale, entre la chambre centrale et la filière de sortie, de sorte que l'ensemble du flux de matériau provenant de la chambre centrale s'écoule par la filière mobile en pénétrant par le passage de l'actionneur, et une seconde position dans laquelle ladite filière mobile est disposée en amont de ladite chambre centrale entre ladite chambre et le moyen de guidage, de sorte que l'ensemble du flux de matériau provenant de la chambre centrale s'écoule par la filière de sortie.

L'invention a également pour objet le procédé lié à l'utilisation de ce dispositif dans lequel on interpose une filière mobile, de section de calibrage S₂ inférieure à la section se calibrage S₁ de la filière de sortie, entre la chambre centrale et la filière de sortie lorsque le ou les fils circulent à vitesse réduite, et que l'on ramène la filière mobile en amont de la chambre centrale lorsque le ou les fils circulent à vitesse élevée.

A vitesse faible, l'effet vitesse d'entraînement du fil sur le matériau est réduit, et la section de calibrage peut alors être également réduite, ce qui est obtenu en interposant la filière mobile en aval de la chambre centrale, entre la chambre centrale et la filière de sortie.

Le matériau sous pression contenu dans la chambre centrale est mis en contact avec le fil F et la gaine de matériau est formée à la section désirée au niveau de la section de calibrage de la filière mobile.

Comme il a été dit plus haut, la section de la gaine formée autour du fil est légèrement inférieure à la section de calibrage de la filière mobile et par voie de conséquence inférieure également à la section de la filière de sortie. Ainsi, à petite vitesse, la filière de sortie ne perturbe pas le profilage de la gaine qui est formée au niveau de la filière mobile.

A grande vitesse, la filière mobile est déplacée en amont de la chambre centrale et n'a alors plus d'effet dans la formation de la gaine dont les caractéristiques sont conférées par la filière de sortie dont la section de calibrage est supérieure à la section de calibrage de la filière mobile. La diminution de diamètre liée à l'effet vitesse décrit ci-dessus est plus importante et, pour conserver une section de gainage constante il est possible de réguler la pression dans la chambre centrale en restant dans la même plage de régulation que celle utilisée pour la vitesse réduite. Il n'est donc plus nécessaire d'augmenter la pression dans la chambre centrale lorsque l'on augmente la vitesse de progression du fil.

Ce dispositif permet donc de gainer un fil à l'aide d'un matériau plastique ou thermoplastique se présentant à l'état visqueux sur une gamme de vitesse importante. De plus, ce système s'avère particulièrement performant lorsque l'on souhaite réaliser une gaine de faible épaisseur.

Une mise en oeuvre préférentielle de l'invention est illustrée sur les figures 1 à 7 dans lesquelles
- la figure 1 représente une vue schématique en coupe d'un dispositif de gainage dans lequel la filière mobile est disposée entre la filière de sortie et la chambre centrale correspondant à la configuration « faible vitesse »,
- la figure 2 représente une vue schématique en coupe du dispositif de gainage dans lequel la filière mobile est disposée en amont de la chambre centrale, correspondant à la configuration « grande vitesse »,
- la figure 3 représente une vue schématique en perspective du guide fil placé en entrée du dispositif de gainage,
- la figure 4 représente une vue schématique en perspective d'une filière mobile prolongée de son actionneur,
- la figure 5 représente une vue schématique en perspective d'un élément de racleur,
- la figure 6 représente une vue schématique en perspective du montage de la filière mobile munie de son actionneur du racleur et du guide fil sur leur support,
- la figure 7 représente une vue schématique en coupe de la filière mobile munie de son actionneur, du racleur et du guide fil montés sur leur support tel qu'illustré à la figure 6.

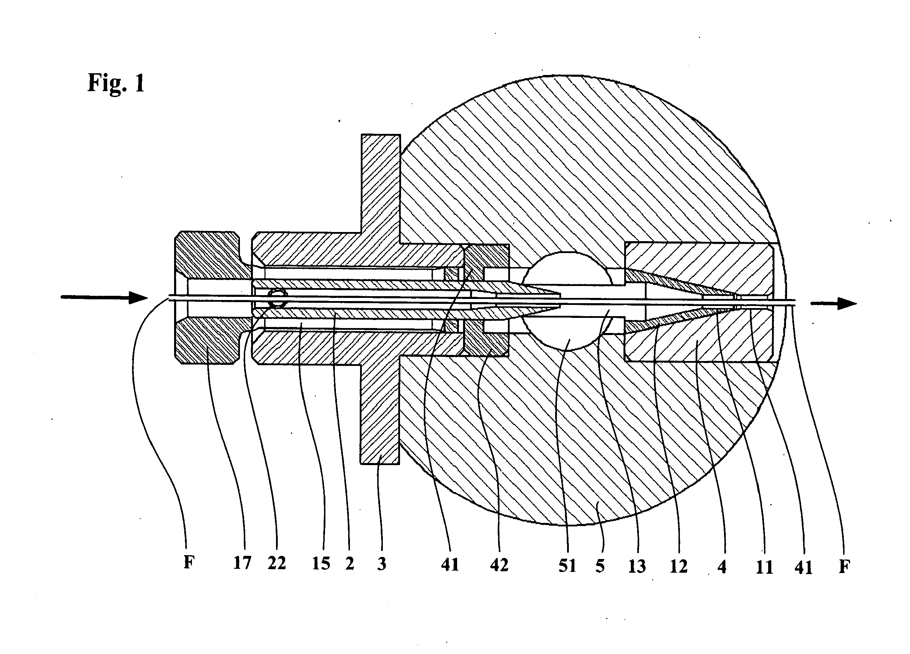

La figure 1 représente un dispositif de gainage selon l'invention. Ce dispositif comprend un corps 5 entourant la chambre centrale 51 relié par un conduit à un moyen d'extrusion (non représenté). Le moyen d'extrusion a pour fonction d'alimenter sous pression la chambre centrale en matériau plastique ou thermoplastique se présentant à l'état visqueux. Ce moyen peut être formé de manière tout à fait classique par une extrudeuse comportant une vis disposée dans un fourreau dont la vitesse de rotation agit sur le débit et la pression. La vis peut également être conçue pour agir sur la plasticité et la viscosité du matériau de manière à délivrer dans la chambre centrale un matériau présentant les caractéristiques optimales en vue du gainage du fil.

Il est aussi possible d'utiliser d'autres moyens d'extrusion aptes à délivrer un matériau sous pression tels que, à titre d'exemple, des pompes volumétriques du type à engrenage ou du type à piston.

Le dispositif faisant l'objet de la présente description est plus particulièrement destiné à gainer un fil ou un câble textile ou métallique avec un matériau caoutchoutique. Il convient toutefois de noter que le dispositif et le procédé selon l'invention peuvent tout aussi bien, moyennant les adaptations nécessaires aux caractéristiques des matériaux employés, être utilisé pour le gainage d'un fil par tout autre type de matériau présentant les caractéristiques de viscosité le rendant apte à l'opération de gainage. Ainsi, pour le gainage d'un fil par un matériau thermoplastique il sera nécessaire de tenir compte des spécificités thermiques de ce matériau pour l'amener dans la chambre centrale dans les conditions de viscosité désirées.

Le corps 5 est traversé de part en part par le fil F qui circule à une vitesse donnée dans le sens des flèches en passant successivement au travers du guide fil 2, de la chambre centrale 51 et de la filière de sortie 4.

Le guide fil 2 est monté sur un support 3 lui-même maintenu solidaire du corps 5 par un ensemble de vis (non représentées). Il a pour fonction de centrer le fil à l'entrée de la chambre centrale et, d'empêcher la gomme sous pression présente dans la dite chambre de pénétrer dans le dispositif de guidage.

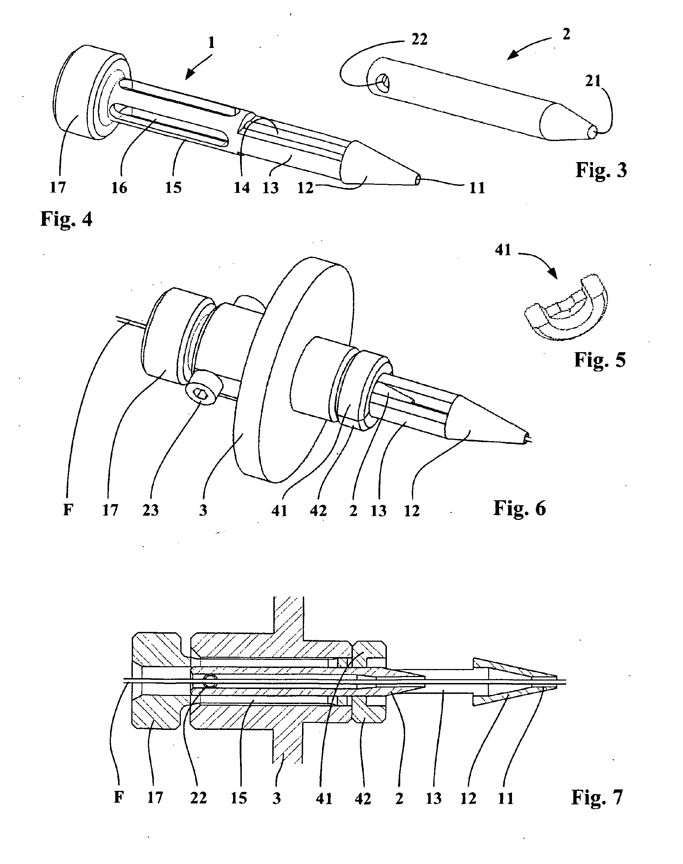

Le guide fil est maintenu sur le support par deux vis 23 insérées dans les filetages 22 comme cela est représenté à la figure 3 et à la figure 6. A titre d'information, la section de sortie 21 du guide fil est sensiblement égale à la section du ou des fils augmentée de 0,3/10^{ième} de millimètre environ. On observera également que l'effet vitesse décrit ci-dessus, combiné à une faible différence entre la section du fil et la section de sortie du guide fil, agissent favorablement pour empêcher la gomme présente dans la chambre centrale de sortir par le dispositif de guidage.

La filière mobile 12 est représentée sur la figure 1 dans la configuration « faible vitesse », en aval de la chambre centrale 51 et en amont de la filière de sortie 4. En pratique on adapte la forme de la filière mobile 12 et de la filière de sortie 4 pour que ces deux filières s'ajustent l'une dans l'autre afin de réduire l'encombrement de l'ensemble.

La filière de sortie 4 est fixe par rapport au corps 5.

La surface du fil est enduite au niveau de la chambre centrale 51, et la forme de la section finale de la gaine est donnée par la section de calibrage S₂ située sur la portion aval 11 de la filière mobile 12.

A titre illustratif lorsque la section S est circulaire c'est-à-dire lorsque l'on cherche à obtenir un fil unitaire gainé, la différence de diamètre entre la section S₁ et la section S₂ est de l'ordre de 1/10^{ième} à 2/10^{ième} de millimètre. La plage de vitesse peut varier de 0 à 8m/s et la plage de pression peut être régulée sans peine entre 1 Mpa et 20 Mpa lorsque l'on cherche à déposer à la surface du fil un matériau caoutchouteux formant une couche d'une épaisseur de 1/10^{ième} de millimètre,

La filière mobile 12 est entraînée en mouvement par un actionneur relié à la partie arrière de la filière mobile 12. L'actionneur traverse la chambre centrale 51 et le support 3, et comporte une partie avant 13, une partie intermédiaire 15 et une tête 17 comme cela est illustré à la figure 4.

.La partie avant 13 de l'actionneur comporte un passage 14 autorisant la circulation du matériau depuis la chambre centrale 51 jusqu'au volume intérieur de la filière mobile dans laquelle circule le fil F lorsque le dispositif est en fonctionnement et que la filière mobile est placée dans la configuration « faible vitesse ».

La portion intermédiaire 15 de l'actionneur coulisse librement dans le support 3 et autour du guide fil 2. A cet effet, des lumières longitudinales 16 sont pratiquées sur toute la longueur de cette portion 15, de manière à permettre le passage des vis 23 destinées à maintenir le guide fil 2 en position fixe et solidaire du support 3.

La partie arrière de l'actionneur comporte une tête 17, destinée à être reliée à un mécanisme d'animation (non représenté)tel qu'un vérin pneumatique ou hydraulique ou encore un actionneur électrique tel qu'un moteur linéaire.

L'actionneur, selon la présente description, est disposé en amont de la filière mobile 12. On notera qu'il est également possible de disposer l'actionneur en aval de la filière mobile ou encore de concevoir un jeu de tiroirs aptes à entraîner la filière mobile en mouvement, et disposé sur la partie latérale des parois de la chambre centrale.

Un racleur 4, formé de deux demi-coquilles 41 et 42, tel qu'illustré à la figure 5, est disposé sur la partie avant du support. La forme du racleur est adaptée pour épouser la forme de la section extérieure de la partie avant 13, 14 de l'actionneur. Le racleur a pour fonction d'éviter la pénétration du matériau dans la partie du support où est disposée le guide fil, et dans laquelle circule l'actionneur lorsque l'actionneur est déplacé entre l'amont et l'aval de la chambre centrale.

La vue schématique de l'ensemble comportant le support 3, contenant la filière mobile 12 munie de son actionneur, le guide fil 2 et le racleur 41, 42 est illustré selon une vue en perspective à la figure 6, et selon une vue en coupe à la figure 7.

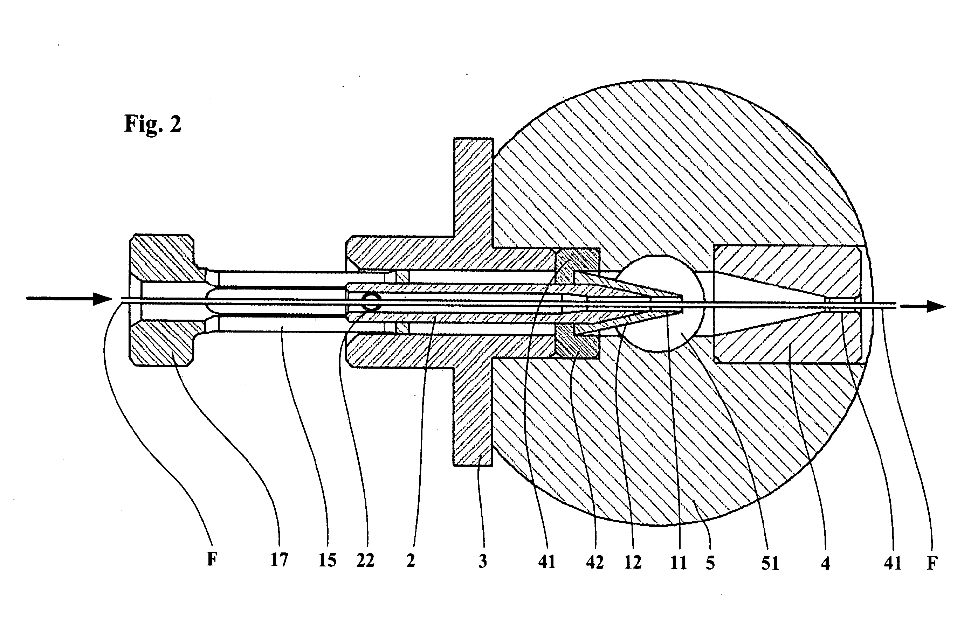

La figure 2 représente le dispositif de gainage dans la configuration dite « grande vitesse ». La filière mobile 12 est déplacée vers l'amont du dispositif, la partie interne de la filière mobile vient s'emboîter autour de l'extrémité du guide fil de manière à dégager l'espace interne de la chambre centrale 51 qui est alors en communication directe avec la partie intérieure de la filière de sortie 4. La filière mobile 12 est neutralisée.

Le calibrage du fil se fait au niveau de la partie aval 41 de la filière de sortie 4 dont la section S₂ est supérieure à la section S₁ de la filière mobile.

Le dispositif faisant l'objet de la présente description comporte une seule filière mobile 12 et une filière de sortie 4. Il est également possible, sans se départir de l'esprit de l'invention, de disposer plusieurs filières mobiles selon la direction de progression du fil, dont la section de calibrage Sᵢ décroît selon leur rang en amont de la filière de sortie. Ce montage, plus complexe, peut permettre de résoudre les difficultés occasionnées par la mise en oeuvre de matériaux fortement visqueux ou par la réalisation de gainage de très faible épaisseur.

Il est alors possible d'utiliser la filière de plus faible section pour les vitesses les plus faible, puis de retirer la filière de plus faible section lorsque la vitesse augmente. Le calibrage final est alors opéré par une filière de section intermédiaire. Lorsque l'on atteint la vitesse maximale, toutes les filières mobiles sont neutralisées en amont de la chambre centrale, et le calibrage de la gaine est opéré par la filière de sortie 4 dont la section S₁ est supérieure à la section Sᵢ de toutes les filières mobiles.

La présente description décrit un dispositif apte à gainer un fil unitaire. Il convient toutefois de remarquer que les principes de l'invention peuvent également s'appliquer lorsque l'on cherche à enduire d'un matériau visqueux un ensemble de fils disposés cote à cote parallèlement les uns aux autres dans un même plan et formant une nappe de manière à obtenir une bandelette de fils enrobés.

A cet effet il suffit d'adapter la section du guide fil, de la ou des filières mobile ainsi que la section de la filière de sortie. Au lieu d'une section circulaire convenant à un seul fil, la section des ces différents moyens est allongée dans la direction du plan de la nappe perpendiculaire à la direction de progression, et adopte une forme oblongue, adaptée à la largeur de la nappe de fils.

L'invention a également pour objet un procédé de gainage par un matériau plastique ou thermoplastique d'un ou plusieurs fils et utilisant le dispositif faisant l'objet de la présente description. Le procédé consiste à interposer au moins une filière mobile (12) de section de calibrage S₂ inférieure à la section se calibrage S₁ de la filière de sortie (4) entre la chambre centrale (51) et la filière de sortie (4) lorsque le ou les fils circulent à vitesse réduite, et que l'on ramène la filière mobile (12) en amont de la chambre centrale (51) lorsque le ou les fils circulent à vitesse élevée.

Les mouvements de la (ou des) filière mobile sont commandés par l'actionneur. Comme cela a été dit plus haut, cet actionneur peut lui-même être relié à un mécanisme d'animation du type d'un vérin pneumatique ou d'un moteur linéaire, et commandé par l'automatisme de pilotage du procédé.

Il suffit donc d'indiquer à l'automatisme les seuils de vitesse au-delà desquels on souhaite déplacer la (ou les) filière mobile. Pour une épaisseur de gainage donnée, la plage de régulation de pression d'arrivée du matériau dans la chambre centrale à une vitesse et une section de calibrage donnée, est la même que pour une section de calibrage et une vitesse supérieure.

De manière à éviter les surépaisseurs de gainage localisées et liées au changement de filière, une première méthode consiste à maintenir le niveau de pression permettant d'obtenir l'épaisseur de gainage désiré pour une vitesse et une section de calibrage données, et à effectuer un mouvement rapide de la filière mobile combiné à une montée rapide en vitesse, de manière à se retrouver à la vitesse et à la section de calibrage supérieure correspondant, pour ce même niveau de pression, à la consigne permettant d'obtenir une épaisseur de gainage très proche de l'épaisseur obtenue à faible vitesse dans la configuration précédente. Le processus inverse s'appliquant pour passer de la vitesse élevée à la faible vitesse

On peut aussi piloter la régulation de la pression d'arrivée du matériau dans la chambre centrale en fonction de la montée en vitesse de défilement du fil jusqu'à atteindre le niveau maximum de pression, puis changer la position de la filière mobile, en ramenant la pression à un niveau inférieur, sous réserve de disposer d'un moyen de régulation de pression apte à générer des variations rapides.

Il convient de noter toutefois que le mouvement de la filière mobile peut être extrêmement rapide et que la dynamique du système est avant tout liée à la dynamique de variation de vitesse de progression du fil.

Ainsi le dispositif et le procédé d'utilisation du dispositif selon l'invention permettent de disposer d'un moyen apte à produire un fil gainé sur une plage de vitesse élevée tout en conservant une épaisseur de gainage sensiblement constante. Aussi, l'utilisation de ce dispositif s'avère particulièrement intéressant lorsque le dispositif selon l'invention est couplé à des processus industriels placés en aval connaissant de fortes variations de consommation instantanées et que l'on ne souhaite pas augmenter la taille des dispositifs tampons placés entre le dispositif de gainage et le processus aval.

Le dispositif et le procédé tels que décrits ci-dessus permettent de gainer un fil ou un ensemble de fils en déposant une gaine d'épaisseur sensiblement constante quelle que soit la vitesse de déplacement du fil tout en régulant la pression du matériau dans la chambre central dans une plage relativement réduite.

Ce procédé est entre autre utilisé pour fabriquer en grande quantité un fil continu gainé de caoutchouc, tel que les fils utilisés pour la réalisation des pneumatiques destinés aux véhicules.

Ce même dispositif peut tout aussi bien être utilisé pour gainer un fil en déposant une gaine d'épaisseur variable, en changeant la section de calibrage à volonté et en conservant une vitesse de progression du fil et une pression du matériau dans la chambre centrale sensiblement constantes. Le mouvement de la filière mobile étant quasi instantanée cela permet de produire un fil comportant des épaisseurs de gainage différentes sur des longueurs de fils données et prédéterminées.

Il est ainsi possible de piloter le mouvement de la filière mobile de manière alternative pour obtenir un fil comportant une succession de tronçons identiques dans lesquels l'épaisseur de gainage varie entre une première épaisseur et une seconde épaisseur différente de la première.

Cette application peut s'avérer particulièrement intéressante lorsque le fil est destiné par exemple à être utilisé comme fil de renfort carcasse d'un pneumatique pour lequel il est nécessaire de distinguer les épaisseurs de gainage de la partie du fil située en zone basse et de la partie située dans la zone sommet.

## Revendications

1. Dispositif de gainage d'un ou plusieurs fils (F) par un matériau plastique ou thermoplastique comprenant un moyen de guidage (2) du ou des fils disposé en entrée du dispositif et débouchant dans une chambre centrale (51) reliée par un conduit à un moyen d'extrusion apte à délivrer sous pression ledit matériau se présentant à l'état visqueux, une filière de sortie (4) du ou des fils gainés d'une section de calibrage donnée S₁, et au moins une filière mobile (12) de section de calibrage S₂ inférieure à la section de calibrage S₁,
**caractérisé en ce que** chaque filières mobile (12) est entraînée dans la direction de progression du ou des fils (F) par un actionneur (13, 15, 17) traversant la chambre centrale et comportant un passage (14) permettant de mettre en communication la chambre centrale (51) avec l'espace intérieur de la filière mobile (12).

2. Dispositif selon la revendication 1 dans lequel, lorsque le dispositif est en fonctionnement, l'actionneur (13, 17, 14) déplace ladite filière mobile (12) entre une position dans laquelle ladite filière mobile s'interpose en aval de la chambre centrale (51) entre la chambre centrale (51) et la filière de sortie (4), de sorte que l'ensemble du flux de matériau provenant de la chambre centrale (51) s'écoule par la filière mobile (12) en pénétrant par le passage (14) de l'actionneur, et une seconde position dans laquelle ladite filière mobile (12) est disposée en amont de ladite chambre centrale (51) entre ladite chambre et le moyen de guidage (2) de sorte que l'ensemble du flux de matériau provenant de la chambre centrale (51) s'écoule par la filière de sortie (4).

3. Dispositif de gainage selon la revendication 1 comprenant plusieurs filières mobiles, dans lequel les filières mobiles ont une section de calibrage Sᵢ décroissante selon leur rang en amont de la filière de sortie (4).

4. Dispositif de gainage selon l'une des revendications 1 à3, dans lequel la section (S₁, S₂, Sᵢ) des filières (1, 4) est de forme circulaire.

5. Dispositif de gainage selon l'une des revendications 1 à 3, dans lequel la section (S₁, S₂) des filières (1, 4) est de forme oblongue.

6. Dispositif de gainage selon l'une des revendications 1 à 5 dans lequel le moyen d'extrusion comporte un moyen de régulation de la pression du matériau dans la chambre centrale (51).

7. Procédé de gainage d'un ou plusieurs fils par un matériau plastique ou thermoplastique à l'aide d'un dispositif selon l'une des revendications 1 à 8, **caractérisé en ce qu'**on interpose une filière mobile (12) de section de calibrage S₂ inférieure à la section se calibrage S₁ de à filière de sortie (4) entre la chambre centrale (51) et la filière de sortie (4) lorsque le ou les fils circulent à vitesse réduite, et que l'on ramène la filière mobile (1) en amont de la chambre centrale (51) lorsque le ou les fils circulent à vitesse élevée.

8. Procédé de gainage selon la revendication 7 dans lequel on fait circuler un fil unitaire dans le dispositif de manière à obtenir un fil unitaire enrobé.

9. Procédé de gainage selon la revendication 7, dans lequel on fait circuler un ensemble de fils disposés cote à cote parallèlement les uns aux autres dans un même plan de manière à obtenir une bandelette de fils enrobés.

10. Procédé de gainage selon l'une des revendications 7 à 9, dans lequel le matériau plastique est du caoutchouc.

## Claims

1. Cord sheathing device for one or more cords (F) with a plastic or thermoplastic material, comprising guiding means (2) for the cord(s) arranged at the inlet of the device and leading to a central chamber (51) connected by a duct to extrusion means that can deliver the said material under pressure in the viscous condition, and an outlet die (4) of given calibration section S₁ for the sheathed cord(s), and at least one mobile die (12) with calibration section S₂ smaller than the calibration section S₁,
**characterised in that** each mobile die (12) is moved in the travel direction of the cord(s) (F) by an actuator (13, 15, 17) passing through the central chamber (51) and having a passage (14) allowing the central chamber (51) to communicate with the interior space of the mobile die (12)

2. Sheathing device according to claim 1 in which, when the device is actuated, the actuator (13, 15, 17) moves said mobile die between a position in which the said mobile die is interposed downstream from the central chamber (51) between the central chamber (51) and the outlet die (4), so that the flow of incoming material from the central chamber (51) passes through the mobile die (12) when penetrating the passage (14) of the actuator, and a second position in which the said mobile die (12) is arranged upstream from the said central chamber (51) between the said chamber and the guiding means (2) so that the incoming material from the central chamber (51) passes through the outlet die (4).

3. Sheathing device according to Claim 1, comprising a plurality of mobile dies, in which the mobile dies have calibration sections Sᵢ which decrease progressively from one to the next upstream from the outlet die (4).

4. Sheathing device according to either of Claims 1 or 2, in which the section (S₁, S₂, Sᵢ) of the dies (1, 4) is of circular shape.

5. Sheathing device according to either of Claims 1 or 2, in which the section (S₁, S₂) of the dies (1, 4) is of oblong shape.

6. Sheathing device according to any of Claims 1 to 5 in which the extrusion means comprise means for regulating the pressure of the material in the central chamber (51).

7. Process for sheathing one or more cords with a plastic or thermoplastic material using a device according to any of Claims 1 to 8,
**characterised in that** a mobile die (12) with calibration section S₂ smaller than the calibration section S₁ of the outlet die (4) is interposed between the central chamber (51) and the outlet die (4) when the cord(s) is/are moving at low speed, and the mobile die (1) is moved upstream from the central chamber (51) when the cord(s) is/are moving at high speed.

8. Sheathing process according to Claim 7, in which a unitary cord is moved through the device so as to obtain a coated unitary cord.

9. Sheathing process according to Claim 7, in which an array of cords arranged side by side parallel to one another in the same plane are moved through the device to obtain a strip of coated cords.

10. Sheathing process according to any of Claims 7 to 9, in which the plastic material is rubber.

## Patentansprüche

1. Vorrichtung zur Ummantelung eines oder mehrerer Drähte (F) mit einem Kunststoff- oder Thermoplastmaterial, die ein Mittel zur Führung (2) des oder der Drähte, das am Eingang der Vorrichtung angeordnet ist und in eine Mittelkammer (51) mündet, die über eine Durchführung mit einem Extrusionsmittel verbunden ist, das geeignet ist, das Material, das im dickflüssigen Zustand erscheint, unter Druck abzugeben, eine Düse für den Austritt (4) des oder der ummantelten Drähte mit einem gegebenen Kalibrierungsquerschnitt S₁ und mindestens eine bewegliche Düse (12) mit einem Kalibrierungsquerschnitt S₂ aufweist, der kleiner ist als der Kalibrierungsquerschnitt S₁,
**dadurch gekennzeichnet, dass** jede bewegliche Düse (12) durch einen Antrieb (13, 15, 17), der die Mittelkammer durchquert und einen Durchgang (14), aufweist, der das Verbinden der Mittelkammer (51) mit dem Innenraum der beweglichen Düse (12) ermöglicht, in die Vorschubrichtung des oder der Drähte (F) mitgenommen wird.

2. Vorrichtung nach Anspruch 1, wobei der Antrieb (13, 17, 14), wenn die Vorrichtung in Betrieb ist, die bewegliche Düse (12) zwischen einer Position, in der die bewegliche Düse sich unterhalb der Mittelkammer (51) zwischen der Mittelkammer (51) und der Austrittsdüse (4) zwischenstellt, derart, dass der gesamte Materialfluss aus der Mittelkammer (51) durch die bewegliche Düse (12) läuft, indem er durch den Durchgang (14) des Antriebs einströmt, und einer zweiten Position verschiebt, in der die bewegliche Düse (12) oberhalb der Mittelkammer (51) zwischen der Kammer und dem Führungsmittel (2) angeordnet ist, derart dass der gesamte Materialfluss aus der Mittelkammer (51) durch die Austrittsdüse (4) läuft.

3. Ummantelungsvorrichtung nach Anspruch 1, die mehrere bewegliche Düsen aufweist, wobei die beweglichen Düsen einen Kalibrierungsquerschnitt S₁ aufweisen, der gemäß ihrer Lage oberhalb der Austrittsdüse (4) abnimmt .

4. Ummantelungsvorrichtung nach einem der Ansprüche 1 bis 3, wobei der Querschnitt (S₁, S₂, Sᵢ) der Düsen (1, 4) kreisförmig ist.

5. Ummantelungsvorrichtung nach einem der Ansprüche 1 bis 3, wobei der Querschnitt (S₁, S₂) der Düsen (1, 4) länglich ist.

6. Ummantelungsvorrichtung nach einem der Ansprüche 1 bis 5, wobei das Extrusionsmittel ein Mittel zum Regeln des Drucks des Materials in der Mittelkammer (51) aufweist.

7. Verfahren zur Ummantelung eines oder mehrerer Drähte mit einem Kunststoff- oder Thermoplastmaterial mittels einer Vorrichtung nach einem der Ansprüche 1 bis 8, **dadurch gekennzeichnet, dass** zwischen der Mittelkammer (51) und der Austrittsdüse (4) eine bewegliche Düse (12) mit einem Kalibrierungsquerschnitt S₂ zwischengestellt wird, der kleiner ist als der Kalibrierungsquerschnitt S₁ der Austrittsdüse (4), wenn der oder die Drähte bei verminderter Geschwindigkeit umlaufen, und die bewegliche Düse (1) vor die Mittelkammer (51) zurückgeführt wird, wenn der oder die Drähte bei erhöhter Geschwindigkeit umlaufen.

8. Ummantelungsverfahren nach Anspruch 7, wobei ein einzelner Draht in der Vorrichtung umlaufen gelassen wird, derart, dass ein einzelner umhüllter Draht erhalten wird.

9. Ummantelungsverfahren nach Anspruch 7, wobei eine Gruppe von Drähten, die Seite an Seite parallel zueinander in einer gleichen Ebene angeordnet sind, umlaufen gelassen wird, derart, dass ein Streifen umhüllter Drähte erhalten wird.

10. Ummantelungsverfahren nach einem der Ansprüche 7 bis 9, wobei das Kunststoffmaterial Kautschuk ist.
